# EUROPEAN PATENT SPECIFICATION

(11) **EP 2 832 575 B1**
(45) Date of publication and mention of the grant of the patent: **22.11.2017**
(21) Application number: 14179465.1
(22) Date of filing: 01.08.2014
(51) Int. Cl.: F02N 11/04, F02N 11/00, F02N 15/02, B60K 25/00

(54) **Terrestrial vehicle with internal combustion engine and auxiliary devices**
Terrestrisches Fahrzeug mit Brennkraftmaschine und Zusatzvorrichtungen
Véhicule terrestre avec un moteur à combustion interne et des appareils auxiliaires

(30) Priority: 02.08.2013 IT MI20131312
(43) Date of publication of application: 04.02.2015
(73) Proprietor: ALTRA S.P.A., 16138 Genova (IT)
(72) Inventor: Bernardini, Alessandro, 16126 Genova (IT); Mantovani, Giorgio, 16148 Genova (IT); Barbieri, Armando, 16156 Genova (IT)
(74) Representative: Franzolin, Luigi

(56) References cited:
- EP-A2- 1 207 298
- WO-A1-2013/004595
- WO-A2-2013/049438
- DE-A1- 4 225 315
- DE-A1-102006 013 502
- US-A1- 2008 039 263

## Description

### Application field of the invention

The present invention refers to the field of land vehicles equipped with an internal combustion engine equipped with an electric motor-generator to produce at least the energy necessary to start the internal combustion engine.

### Description of the prior art

According to the prior art, an internal combustion engine is coupled to a generator to produce the electric energy that is necessary to start the internal combustion engine and it is coupled also to an electric starter.

According to the known techniques to manage the internal combustion engine switching off in conditions of high density traffic, known with the expression Stop&Start, it may happen that the on-board services, controlled directly by the internal combustion engine, stop working when the engine is switched off.

A solution is achieved by WO2013/049438, whose features are described in the preamble of claim 1. However, it is believed that there is room for improving the configurations known in the art.

### Summary of the invention

The aim of the present invention is to provide a vehicle equipped with a system for starting the internal combustion engine and for generating electric energy in relation to the operating conditions of the vehicle, so as to optimize the functionalities of the vehicle itself, with particular reference to the on-board services.

The object of the present invention is a vehicle in accordance with claim 1.

The present invention refers not only to the system for "starting"/"generating"/"managing the auxiliary devices", but also to a method for managing the system itself.

The claims are an integral part of the present description, defining preferred alternative embodiments of the invention.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 shows a general outline of the traction system of the vehicle that is object of the present invention;
figure 2 shows flow diagrams of the operating modes of the system.

In the figures the same reference numbers and letters identify the same elements or components.

### Detailed description of preferred embodiments of the invention

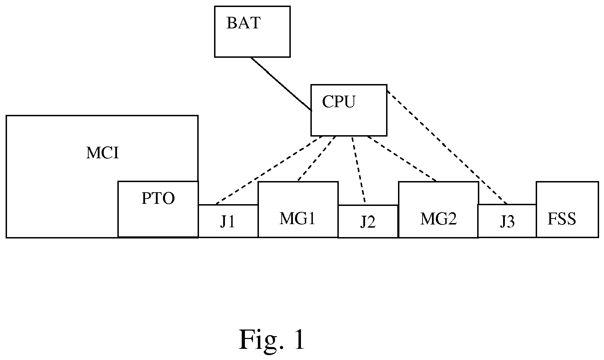

With reference to figure 1, where a preferred implementation of the present invention is schematized, an internal combustion engine MCI is provided with a power takeoff to which a first electric motor-generator MG1 is connected by means of a controllable transmission joint J1.

The power takeoff can be of any type, for example the front one, namely the one to which auxiliary devices that absorb low levels of torque are connected, usually by means of pulleys.

The rear power takeoff, on the contrary, is the one to which relevant loads are generally connected, such as oil pumps, compressor of the air necessary to control the suspensions and/or the braking system and additional devices according to the vehicle equipment. In this case, the torque/power absorbed by the auxiliary services can also exceed 50% of the one deliverable by the engine.

The mark FSS indicates the auxiliary services with both high torque/power absorption and low power/torque absorption without distinction. In other words, the configuration described here can be obtained by means of both the front and the rear power takeoff of the internal combustion engine.

The electric motor-generator MG1 can be connected directly to control the on-board auxiliary devices or the aforementioned oil pumps, for example by a fixed or a controllable joint (not shown). Thus it may have a shaft with two opposite ends, of which at least one is accessible, of which a first end is connectable to the PTO of the internal combustion engine and, for example, a second end is connected or connectable to the auxiliary services (or to the oil sumps generally connected to the rear power takeoff).

According to another preferred alternative embodiment of the invention, the shaft of the motor-generator MG1 is connected by a first end to the PTO of the internal combustion engine and by a second end to a second electric motor-generator MG2 by means of a second controllable joint J2.

Therefore, the shaft of the second motor-generator MG2 comprises a first end connectable with the tree of the first motor-generator and a second end connected or connectable to the auxiliary services. Thus, the second end has a fixed or a controllable joint J3 for the connection to the on-board auxiliary devices.

Among the auxiliary devices there can be, for example, the compressor of the air conditioning, the pump of the hydraulic power steering, the fan of the radiator, the water pump, the air compressor, the vacuum pump, etc..

The joints J1, J2 and J3 can be made by means of transmission systems of the type belt/pulley, either by means of hydraulic or electromagnetic or pneumatic clutches, hydraulic or electromagnetic or pneumatic joints, or by means of gear transmissions.

One or more batteries BAT or similar devices are arranged to store electric energy and, similarly, one or more electric energy converters can be provided both to generate electric energy to be stored, and to guide the electric motors MG1 and MG2 using the energy stored.

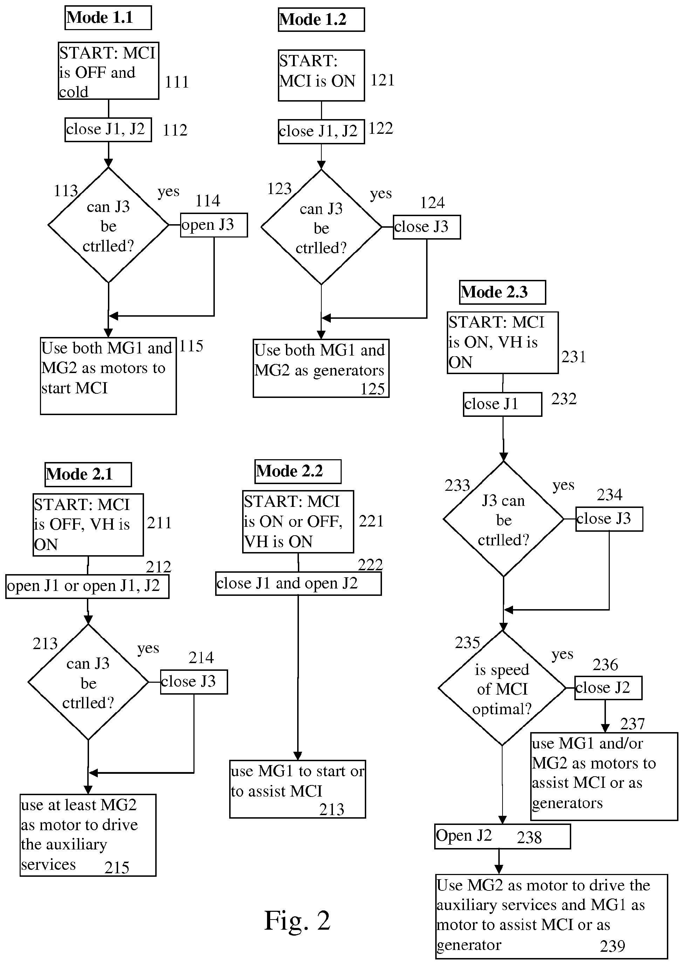

In the following, the operating modes of the system that is object of the present invention are described, in relation to the control of the joint(s) and of the motor-generator(s):
1) Mode 1.1, called "cold starting": with the vehicle initially stopped and the internal combustion engine MCI initially switched off,
   - joints J1 and J2, if the second motor-generator MG2 is present, is/are closed or kept closed and J3, if controllable, is open or kept open, to reduce the resistant torque provided to the motor-generator(s)
   - the two motor-generators MG1 and MG2 (if also the second motor-generator MG2 is present) are activated together as electric motors to start the internal combustion engine.
   It is worth clarifying that where it is indicated that the joint J3 is absent, it is to be intended that the joint J3 is present, but it is fixed, namely not controllable. This implies that when both electric motors are used for a cold start of the internal combustion engine, it is not possible to disconnect the on-board services.
   With reference to figure 2:
   - step 111: acquisition of the operating conditions of the vehicle, in particular, condition of the engine MCI and temperature, for example, of the coolant, if the engine is switched off, cold and has to be started,
   - step 112: closing of J1 and J2,
   - step 113: verification if J3 is controllable,
   if J3 is controllable: step 114 opening of J3,
   - otherwise: step 115 use of both motors MG1, MG2 as motors to start MCI.
2) Mode 1.2, called "normal with smart motor-generators": with internal combustion engine MCI activated,
   - joints J1, J2, J3 are closed
   - the two motor-generators MG1 and MG2 (if also the second motor-generator MG2 is present) work as generators providing resistant torque to the heat engine, that can vary as a function of the current electric loads or also in relation to the remaining traction torque of the heat engine itself or also in relation to the occurrence of a braking condition with engine brake, realizing a so called regenerative braking. In such operating conditions, also the auxiliaries are driven by the internal combustion engine proportionally to the revolutions per minute of the engine.
   With reference to figure 2:
   - step 121: acquisition of the operating conditions of the vehicle, in particular, condition of the engine MCI and temperature, for example, of the coolant, if the engine is started and, for example, the vehicle is braking,
   - step 122: closing of J1 and J2,
   - step 123: verification if J3 is controllable,
   if J3 is controllable: step 124 closing of J3,
   - otherwise: step 125 use of both the engines MG1, MG2 as electric generators with control of the resistant torque offered as a function of the operating conditions of MCI.
3) Mode 2.1, called "electric auxiliaries": with internal combustion engine MCI deactivated, and vehicle (VH) in running conditions (ON),
   - the first joint J1 and/or the second joint J2 is/are open or kept open, so that at least one electric motor can drive the auxiliary services being disconnected from the internal combustion engine MCI: if only one motor-generator is present, then J1 is open and the connection means with the services are closed, namely the electric motor drives the auxiliary services; on the contrary, if two motor-generators are present, then J2 can be open or closed in relation to the fact that the first motor generator can collaborate or not in driving the auxiliary services and J3, if controllable, is closed to drive the auxiliary services;
   - the motor-generator (MG1 if it is the only motor-generator or) MG2 or both motor-generators are activated to drive, by means of the joint J3 and possibly also J2, the auxiliary services. Thus J2 is generally open unless the resistant torque provided by the services is such as to require the intervention of also the first motor-generator MG1, to assist the second MG2.
   This operating mode is particularly advantageous in the vehicles provided with the Stop&Start functionality (S&S), hybrid or bimodal, namely wherein an electric motor assists or temporarily replaces the internal combustion engine, wherein the auxiliary services are disabled due to the stopping of the internal combustion engine for a more or less long period of time.
   With reference to figure 2:
   - step 211: acquisition of the operating conditions of the engine, in particular, condition of the engine MCI if the engine is switched off, if the vehicle is running, or if the functioning of the auxiliary services is necessary,
   - step 212: opening of J1 and J2,
   - step 213: verification if J3 is controllable,
   if J3 is controllable: step 214 closing of J3,
   - otherwise: step 215 use of at least MG2 as motor to drive the auxiliary services, or, if the torque required is too high, closing of also J2 and use of both the motor-generators MG1 and MG2 as motors to drive the auxiliary services.
4) Mode 2.2, called "hot starting or minimum hybrid activity": the internal combustion engine MCI is initially stopped and hot, namely having been switched off for a short time and it is necessary to restart it, or it is started and it is necessary to assist it: minimum hybrid functioning:
   - the first joint J1 is closed, while the second joint J2 is open, the conditions of the third joint are not relevant, unless the mode 2.1 is running, in this case, if the third joint is controllable, then it is closed;
   - the motor-generator MG1 by means of the first joint J1 provides for the internal combustion engine starting.
   The operating modes 2.1 and 2.2 can be concomitant. This implies that while the second motor-generator MG2 continues to drive the auxiliary services, the first motor-generator MG1 provides for the internal combustion engine starting, thus J1 and J3 are closed, while J2 is open.
   With reference to figure 2:
   - step 221: acquisition of the operating conditions of the vehicle, in particular, condition of the engine MCI and temperature, for example, of the coolant, if the engine is switched off, hot and it has to be started, or it is started and it has to be assisted,
   - step 222: closing of J1 and opening of J2,
   - step 223: use of MG1 to start or to assist the internal combustion engine MCI.
5) Mode 2.3, called "smart electric auxiliaries & smart motor-generator", with internal combustion engine MCI started
   - the first joint J1 is closed, the second joint is open and the third joint J3 is closed;
   - the first motor-generator MG1 works as generator receiving torque from the internal combustion engine by means of the first joint J1 or it works as motor assisting the internal combustion engine in minimum hybrid mode, while the second motor-generator MG2 provides for driving the auxiliaries at a speed independent of the internal combustion engine by means of the third joint J3, offering an optimized transmission of the mechanical energy to the auxiliaries that can operate at an optimal speed.
   This operating mode is particularly advantageous when, for example, the internal combustion engine is idling and the services need a higher speed of rotation. Similarly, such operating mode is particularly advantageous also when the internal combustion engine runs at high speed and the services need a slower speed of rotation, with consequent savings of the power used.
   The joint J2 can be closed, in these operating modes, only when the speed of rotation of the internal combustion engine corresponds to said optimal speed needed by said on-board auxiliary devices.
   If the joint J2 is open, the second motor-generator works as a motor, otherwise as a generator.
   Thanks to the configuration with two motor-generators and with at least the controllable joints J1 and J2 it is possible to correlate the speed of rotation of the auxiliary services to the speed of rotation of the internal combustion engine. In particular, when the speed of rotation of the engine is optimal for the auxiliary services, then the joint J2 is closed and both the motor-generators work as generators.
   With reference to figure 2:
   - step 231 acquisition of the operating conditions of the vehicle, in particular, condition of the engine MCI and speed of rotation of the engine,
   - step 232: closing of J1,
   - step 233: verification if J3 is controllable,
   if J3 is controllable: step 234 closing of J3,
   - otherwise: step 235: verification if the speed of rotation if optimal for the auxiliary services,
   - if it is optimal:
      - step 236: closing of J2 and
      - step 237: use of MG1 and/or MG2 as motors to assist the internal combustion engine or as generators to generate electric energy in relation to the operating conditions of the internal combustion engine,
   - if it is not optimal:
      - step 238: opening of J2,
      - step 239: use of MG2 as motor to drive the auxiliary services and of MG2 as motor to assist the internal combustion engine or as generator to generate electric energy in relation to the operating conditions of the internal combustion engine.
   It can be further noted that the mode 2.3 includes the mode 1.2.
   The different operating modes described above can be managed by one of the on-board control units of the vehicle, such as, for example, a vehicular control unit CPU, to appropriately select the modes 1.1 or 2.1 or 2.2 or 2.3 controlling, in accordance to what described above, the joints J1, J2 and J3 and the operating mode of MG1 and MG2.
   Preferably, the same vehicular control unit which manages the system S&S, hybrid or bimodal, is configured to manage the aforementioned operating modes and the respective states of the system.

Preferably, the motor-generator MG1 or the motor-generators MG1 and MG2 are the only electric machines connected to the internal combustion engine.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. The elements and the characteristics described in the different preferred embodiments may be combined without departing from the scope of the present application. What is described in the description of the prior art, if not explicitly excluded in the detailed description, has to be considered in combination with the characteristics of the present invention, forming an integral part of the present invention.

## Claims

1. A land vehicle comprising:
- an internal combustion engine (MCI) provided with power take-off (PTO),
- electrical energy storage means (BAT),
- a first electric motor-generator (MG1) having a shaft connected to said power take-off (PTO) by means of a controllable joint (J1) and to auxiliary on-board devices (FSS) by means of further connection means (J2, MG2, J3),
- control means (CPU) of said first controllable joint (J1) of said electric motor-generator (MG1) and of said connection means (J2, MG2, J3)
**Characterized in that**
said further connection means (J2, MG2, J3) comprise:
- a second controllable joint (J2),
- a third fixed or controllable joint (J3),
- a second motor-generator (MG2) having a respective shaft:
• connected to said shaft of said first motor-generator (MG1) by means of said second controllable joint,
• connected to said auxiliary on-board devices by means of said third joint (J3).

2. A vehicle according to claim 1, wherein said control means (CPU) are configured to manage the internal combustion engine in Stop & Start mode and/or hybrid and/or bimodal mode, and when the engine is in Stop mode, are configured to:
- open said first joint (J1),
- close or keep closed said further connection means (J2, MG2, J3),
- activate said first electric motor-generator (MG1) as electric motor to operate said auxiliary on-board devices.

3. A vehicle according to claim 2, wherein said control means (CPU) are further configured, before starting the internal combustion engine, to:
- close said first joint (J2),
- optionally open said further connection means (J2, MG2, J3),
- activate said electric motor-generator (MG1) as electric motor.

4. A vehicle according to claim 1, wherein said control means (CPU) are configured to:
- open said second joint (J2),
- activate said second electric motor-generator (MG1) as electric motor to operate said auxiliary on-board devices (Mode 2.1).

5. A vehicle according to claim 1, wherein said control means (CPU) are configured to manage the internal combustion engine in Stop & Start mode and/or hybrid and/or bimodal mode, and, before hot-starting the internal combustion engine, are further configured to:
- close or keep closed said first joint (J1),
- open or keep open said second joint (J2),
- activate said first electric motor-generator (MG1) as electric motor (Mode 2.2).

6. A vehicle according to claim 1, wherein, when the internal combustion engine (MCI) is active, said control means (CPU) are configured to:
- acquire a revolution speed of the internal combustion engine and check whether said speed is an optimal speed for said auxiliary services, then if said speed is not optimal the control means are configured to:
- close or keep closed said first and third joint (J1,J3) if said third joint is controllable,
- open or keep open said second joint (J2),
- control the first motor-generator (MG1) to make it work either as motor to assist the internal combustion engine (MCI) or as generator,
- control the second motor-generator (MG2) to make it work as motor (Mode 2.3),
if instead said motor speed (MCI) is optimal for the auxiliary services, then the control means are configured to:
- close or keep closed said first, second and third joint (J1,J2,J3) if said third joint is controllable,
- control the first and the second motor-generator (MG1, MG2) so that they can work either as motors to assist the internal combustion engine (MCI) or as generators (Mode 1.2).

7. A vehicle according to claim 1, wherein, when the internal combustion engine (MCI) is off and cold, said control means (CPU) are configured to:
- close or keep closed said first and second joint (J1, J2),
- optionally open or keep open said third joint (J3), if controllable,
- control said first and second motor-generator (MG1, MG2) to make them work as motors to start said internal combustion engine (Mode 1.1).

8. A vehicle according to any one of the preceding claims, wherein one of said joints (J1, J2, J3) is:
- a hydraulic, electromagnetic or pneumatic clutch, and/or
- an electromagnetic or pneumatic hydraulic joint

9. A vehicle according to any one of the preceding claims, wherein both ends of the respective shaft of one of said motor-generators (MG1) are accessible, having a first end connected to a controllable joint (J1, J2) and a second end connected to another fixed or controllable joint (J2,J3).

10. A vehicle according to any one of the preceding claims from 1 to 8, wherein both ends of the respective shaft of a first of said motor-generators (MG1) are accessible, having a first end connected to a controllable joint (J1) and a second end connected to another controllable joint (J2), and both ends of a respective shaft of a second motor-generator (MG2) are accessible, having a first end connected to said controllable joint (J2) and a second end connected to another fixed or controllable joint (J3).

11. A vehicle according to one of the preceding claims wherein said first motor-generator (MG1) is connected to a front or rear power take-off (PTO) of the internal combustion engine (MCI).

## Patentansprüche

1. Landfahrzeug mit:
- einem Verbrennungsmotor (MCI) mit einer Zapfwelle (PTO),
- einer Speichervorrichtung für elektrische Energie (BAT),
- einem ersten elektrischen Motorgenerator (MG1) mit einer Welle, die mittels eines steuerbaren Gelenks (J1) mit der Zapfwelle (PTO) verbunden ist und mittels einer weiteren Verbindungsvorrichtung (J2, MG2, J3) mit Hilfs-On-Board-Vorrichtungen (FSS) verbunden ist,
- Steuervorrichtungen (CPU) für das erste steuerbare Gelenk (J1) des elektrischen Motorgenerators (MG1) und die Verbindungsvorrichtung (J2, MG2, J3),
**dadurch gekennzeichnet, dass**
die weitere Verbindungsvorrichtung (J2, MG2, J3) aufweist:
- ein zweites steuerbares Gelenk (J2),
- ein drittes fixiertes oder steuerbares Gelenk (J3),
- einen zweiten Motorgenerator (MG2) mit einer jeweiligen Welle:
- welche mit der Welle des ersten Motorgenerators (MG1) mittels des zweiten steuerbaren Gelenks verbunden ist,
- welche mit den Hilfs-On-Board-Vorrichtungen mittels des dritten Gelenks (J3) verbunden ist.

2. Fahrzeug nach Anspruch 1, bei dem die Steuervorrichtungen (CPU) zum Handhaben des Verbrennungsmotors in einem Stopp- & Start-Modus und/oder einem Hybrid- und/oder Bimodal-Modus konfiguriert sind und bei im Stopp-Modus befindlichem Motor derart konfiguriert sind, das sie:
- das erste Gelenk (J1) öffnen,
- die weitere Verbindungsvorrichtung (J2, MG2, J3) schließen oder geschlossen halten,
- den ersten elektrischen Motorgenerator (MG1) als Elektromotor zum Betätigen der Hilfs-On-Board-Vorrichtungen aktivieren.

3. Fahrzeug nach Anspruch 2, bei dem die Steuervorrichtungen (CPU) ferner derart konfiguriert sind, das sie vor dem Starten des Verbrennungsmotors:
- das erste Gelenk (J1) schließen,
- die weitere Verbindungsvorrichtung (J2, MG2, J3) optional öffnen,
- den elektrischen Motorgenerator (MG1) als Elektromotor aktivieren.

4. Fahrzeug nach Anspruch 1, bei dem die Steuervorrichtungen (CPU) derart konfiguriert sind, das sie:
- das zweite Gelenk (J2) öffnen,
- den zweiten elektrischen Motorgenerator (MG2) als Elektromotor zum Betätigen der Hilfs-On-Board-Vorrichtungen aktivieren (Modus 2.1).

5. Fahrzeug nach Anspruch 1, bei dem die Steuervorrichtungen (CPU) derart konfiguriert sind, dass sie den Verbrennungsmotor in einem Stopp- & Start-Modus und/oder einem Hybrid- und/oder Bimodal-Modus betätigen und vor dem Heißstarten des Verbrennungsmotors derart konfiguriert sind, dass sie:
- das erste Gelenk (J1) schließen oder geschlossen halten,
- das zweite Gelenk (J2) öffnen oder geöffnet halten,
- den ersten elektrischen Motorgenerator (MG1) als Elektromotor aktivieren (Modus 2.2).

6. Fahrzeug nach Anspruch 1, bei dem, wenn der Verbrennungsmotor (MCI) aktiv ist, die Steuervorrichtungen (CPU) derart konfiguriert sind, das sie:
- eine Drehgeschwindigkeit des Verbrennungsmotors erfassen und prüfen, ob die Geschwindigkeit eine optimale Geschwindigkeit für die Hilfstätigkeiten ist, woraufhin, falls die Geschwindigkeit nicht optimal ist, die Steuervorrichtungen derart konfiguriert sind, das sie:
- das erste und das dritte Gelenk (J1, J3) schließen oder geschlossen halten, falls das dritte Gelenk steuerbar ist,
- das zweite Gelenk (J2) öffnen oder geöffnet halten,
- den ersten Motorgenerator (MG1) derart steuern, dass er dazu veranlasst wird, entweder als Motor zur Unterstützung des Verbrennungsmotors (MCI) oder als Generator zu arbeiten,
- den zweiten Motorgenerator (MG2) derart steuern, dass er dazu veranlasst wird, als Motor zu arbeiten (Modus 2.3),
falls stattdessen die Motorgeschwindigkeit (MCI) optimal für die Hilfstätigkeiten ist, dann die Steuervorrichtungen derart konfiguriert sind, das sie:
- das erste, das zweite und das dritte Gelenk (J1, J2, J3) schließen oder geschlossen halten, falls das dritte Gelenk steuerbar ist,
- den ersten und den zweiten Motorgenerator (MG1, MG2) derart steuern, dass sie entweder als Motoren zur Unterstützung des Verbrennungsmotors (MCI) oder als Generatoren arbeiten können (Modus 1.2).

7. Fahrzeug nach Anspruch 1, bei dem, wenn der Verbrennungsmotor (MCI) ausgeschaltet und kalt ist, die Steuervorrichtungen (CPU) derart konfiguriert sind, das sie:
- das erste und das zweite Gelenk (J1, J2) schließen oder geschlossen halten,
- optional das dritte Gelenk (J3) öffnen oder geöffnet halten, falls dieses steuerbar ist,
- den ersten und den zweiten Motorgenerator (MG1, MG2) derart steuern, dass sie dazu veranlasst werden, als Motoren zum Starten des Verbrennungsmotors zu arbeiten (Modus 1.1).

8. Fahrzeug nach einem der vorhergehenden Ansprüche, bei dem eines der Gelenke (J1, J2, J3) ist:
- eine hydraulische, elektromagnetische oder pneumatische Kupplung und/oder
- ein elektromagnetisches oder pneumatisch-hydraulisches Gelenk.

9. Fahrzeug nach einem der vorhergehenden Ansprüche, bei dem beide Enden der jeweiligen Welle eines der Motorgeneratoren (MG1) zugänglich sind, wobei ein erstes Ende mit einem steuerbaren Gelenk (J1, J2) verbunden ist und ein zweites Ende mit einem weiteren fixierten oder steuerbaren Gelenk (J2, J3) verbunden ist.

10. Fahrzeug nach einem der vorhergehenden Ansprüche, bei dem beide Enden der jeweiligen Welle eines ersten der Motorgeneratoren (MG1) zugänglich sind, wobei ein erstes Ende mit einem steuerbaren Gelenk (J1) verbunden ist und ein zweites Ende mit einem weiteren steuerbaren Gelenk (J2) verbunden ist und beide Enden einer jeweiligen Welle eines zweiten Motorgenerators (MG2) zugänglich sind, wobei ein erstes Ende mit dem steuerbaren Gelenk (J2) verbunden ist und ein zweites Ende mit einem weiteren fixierten oder steuerbaren Gelenk (J3) verbunden ist.

11. Fahrzeug nach einem der vorhergehenden Ansprüche, bei dem der erste Motorgenerator (MG1) mit einer vorderen oder hinteren Zapfwelle (PTO) des Verbrennungsmotors (MCI) verbunden ist.

## Revendications

1. Véhicule terrestre, comprenant :
- un moteur à combustion interne (MCI) comprenant une prise de force (PTO),
- un moyen de stockage d'énergie électrique (BAT),
- un premier moteur-générateur électrique (MG1) ayant un arbre connecté à ladite prise de force (PTO) au moyen d'un joint commandable (J1) et à des dispositifs embarqués auxiliaires (FSS) au moyen de moyens de connexion supplémentaires (J2, MG2, J3),
- des moyens de commande (CPU) dudit premier joint commandable (J1) dudit moteur-générateur électrique (MG1) et desdits moyens de connexion (J2, MG2, J3),
**caractérisé en ce que**
lesdits moyens de connexion supplémentaires (J2, MG2, J3) comprennent :
- un deuxième joint commandable (J2),
- un troisième joint fixe ou commandable (J3),
- un deuxième moteur-générateur (MG2) ayant un arbre respectif :
- connecté audit arbre dudit premier moteur-générateur (MG1) au moyen dudit deuxième joint commandable,
- connecté auxdits dispositifs embarqués auxiliaires au moyen dudit troisième joint (J3).

2. Véhicule selon la revendication 1, dans lequel lesdits moyens de commande (CPU) sont configurés pour gérer le moteur à combustion interne en mode Stop and Start et/ou en mode hybride et/ou en mode bimodal, et, lorsque le moteur est en mode Stop, sont configurés pour :
- ouvrir ledit premier joint (J1),
- fermer ou maintenir fermés lesdits moyens de connexion supplémentaires (J2, MG2, J3),
- activer ledit premier moteur-générateur électrique (MG1) en tant que moteur électrique pour faire fonctionner lesdits dispositifs embarqués auxiliaires.

3. Véhicule selon la revendication 2, dans lequel lesdits moyens de commande (CPU) sont en outre configurés, avant le démarrage du moteur à combustion interne, pour :
- fermer ledit premier joint (J1),
- de manière optionnelle, ouvrir lesdits moyens de connexion supplémentaires (J2, MG2, J3),
- activer ledit moteur-générateur électrique (MG1) en tant que moteur électrique.

4. Véhicule selon la revendication 1, dans lequel lesdits moyens de commande (CPU) sont configurés pour :
- ouvrir ledit deuxième joint (J2),
- activer ledit deuxième moteur-générateur électrique (MG1) en tant que moteur électrique pour faire fonctionner lesdits dispositifs embarqués auxiliaires (mode 2.1).

5. Véhicule selon la revendication 1, dans lequel lesdits moyens de commande (CPU) sont configurés pour gérer le moteur à combustion interne en mode Stop and Start et/ou en mode hybride et/ou en mode bimodal, et avant le démarrage à chaud du moteur à combustion interne, sont en outre configurés pour
- fermer ou maintenir fermé ledit premier joint (J1),
- ouvrir ou maintenir ouvert ledit deuxième joint (J2),
- activer ledit premier moteur-générateur électrique (MG1) en tant que moteur électrique (mode 2.2).

6. Véhicule selon la revendication 1, dans lequel, lorsque le moteur à combustion interne (MCI) est actif, lesdits moyens de commande (CPU) sont configurés pour :
- acquérir une vitesse de rotation du moteur à combustion interne et vérifier si ladite vitesse est une vitesse optimale pour lesdits services auxiliaires, puis, si ladite vitesse n'est pas optimale, les moyens de commande sont configurés pour :
- fermer ou maintenir fermés lesdits premier et troisième joints (J1, J3) si ledit troisième joint est commandable,
- ouvrir ou maintenir ouvert ledit deuxième joint (J2),
- commander le premier moteur-générateur (MG1) de manière à ce qu'il fonctionne soit en tant que moteur pour assister le moteur à combustion interne (MCI) soit en tant que générateur,
- commander le deuxième moteur-générateur (MG2) de manière à ce qu'il fonctionne en tant que moteur (mode 2.3),
et si au contraire, ladite vitesse du moteur (MCI) est optimale pour les services auxiliaires, alors les moyens de commande sont configurés pour :
- fermer ou maintenir fermés lesdits premier, deuxième et troisième joints (J1, J2, J3) si ledit troisième joint peut être commandé,
- commander le premier et le deuxième moteur-générateur (MG1, MG2) de manière à ce qu'ils puissent fonctionner soit en tant que moteurs pour assister le moteur à combustion interne (MCI) soit en tant que générateurs (mode 1.2).

7. Véhicule selon la revendication 1, dans lequel, lorsque le moteur à combustion interne (MCI) est arrêté et froid, lesdits moyens de commande (CPU) sont configurés pour :
- fermer ou maintenir fermés lesdits premier et deuxième joints (J1, J2),
- en option, ouvrir ou maintenir ouvert ledit troisième joint (J3), s'il est commandable,
- commander lesdits premier et deuxième moteurs-générateurs (MG1, MG2) de manière à ce qu'ils fonctionnent en tant que moteurs pour démarrer ledit moteur à combustion interne (mode 1.1).

8. Véhicule selon l'une quelconque des revendications précédentes, dans lequel l'un desdits joints (J1, J2, J3) est :
- un embrayage hydraulique, électromagnétique ou pneumatique, et/ou
- un joint électromagnétique ou pneumatique hydraulique.

9. Véhicule selon l'une quelconque des revendications précédentes, dans lequel les deux extrémités de l'arbre respectif de l'un desdits moteurs-générateurs (MG1) sont accessibles, ayant une première extrémité connectée à un joint commandable (J1, J2) et une deuxième extrémité connectée à un autre joint fixe ou commandable (J2, J3).

10. Véhicule selon l'une quelconque des revendications précédentes 1 à 8, dans lequel les deux extrémités de l'arbre respectif d'un premiers desdits moteurs-générateurs (MG1) sont accessibles, ayant une première extrémité connectée à un joint commandable (J1) et une deuxième extrémité connectée à un autre joint commandable (J2), et les deux extrémités d'un arbre respectif d'un deuxième moteur-générateur (MG2) sont accessibles, ayant une première extrémité connectée audit joint commandable (J2) et une deuxième extrémité connectée à un autre joint fixe ou commandable (J3).

11. Véhicule selon l'une quelconque des revendications précédentes, dans lequel ledit premier moteur-générateur (MG1) est connecté à une prise de force avant ou arrière (PTO) du moteur à combustion interne (MCI).
